# EUROPÄISCHE PATENTANMELDUNG

(11) **EP 2 458 874 A2**
(43) Veröffentlichungstag der Anmeldung: **30.05.2012**
(21) Anmeldenummer: 11177192.9
(22) Anmeldetag: 11.08.2011
(51) Int. Cl.: H04N 9/04, G06T 3/40

(54) **Verfahren und Vorrichtung zur Bildverarbeitung durch Demosaicing**

(30) Priorität: 24.11.2010 DE 102010052438
(71) Anmelder: Balser AG, 22926 Ahrensburg (DE)
(72) Erfinder: Edeler, Torsten, 25746 Heide (DE); Kunze, Jörg, 22926 Ahrensburg (DE)
(74) Vertreter: Eisenführ, Speiser & Partner

(57) **Zusammenfassung**

Die Erfindung betrifft ein Verfahren und eine Vorrichtung zur Bildverarbeitung, wobei Rohdaten eines CYMG-Bildsensors mittels eines Mosaikfilters durch Demosaicing in ein Farbbild umgewandelt werden, bei dem für jeden Bildpunkt ein Farbvektor in einem Farbraum vorliegt.

## Beschreibung

Die Erfindung betrifft ein Verfahren und eine Vorrichtung zur Bildverarbeitung, wobei Rohdaten eines Bildsensors mittels eines Mosaikfilters in ein Farbbild umgewandelt werden, bei dem für jeden Bildpunkt ein Farbvektor in einem Farbraum vorliegt.

Elektronische Bildverarbeitungsgeräte, wie bspw. Kameras odgl., werden für zahlreiche Aufgaben eingesetzt, z.B. in automatisierten Produktionsprozessen oder zur Überwachung von Objekten. Grundsätzlich wird dabei ein Objekt mittels einer Optik, z.B. mittels eines Objektives, auf einem Bildsensor abgebildet. Die Signale des Bildsensors werden von einer Bildverarbeitungseinheit umgewandelt und über eine Schnittstelle, z.B. ein Kabel, eine Funkverbindung oder ein Speichermedium, übertragen.

Es werden analoge Bildverarbeitungsgeräte von digitalen Bildverarbeitungsgeräten unterschieden. Analoge Bildverarbeitungsgeräte verfügen über mindestens eine Schnittstelle, über die mindestens ein analoges Bildsignal übertragen wird, z.B. mittels der bekannten Normen für Bildsignale NTSC (National Television Systems Committee), SECAM (Séquentiel couleur ä mémoire) oder PAL (Phase Alternating Line). Ein solches analoges Bildsignal weist mindestens eine analoge Größe zur Übertragung der Information auf, z.B. eine Ladungsmenge, einen Strom, eine Spannung, eine Frequenz oder eine Phase. Digitale Bildverarbeitungsgeräte hingegen übertragen Signale als Menge oder Folge digitaler Bits, welche jeweils aus Zuständen Null oder Eins bestehen. Auch für die Übertragung digitaler Bildsignale gibt es Normen, z.B. H.242 oder MPEG-3 (Moving Picture Experts Group).

Bildsensoren beinhalten in der Regel eine regelmäßige Anordnung lichtempfindlicher Elemente, welche als Pixel bezeichnet werden. Bildsensoren für Farbkameras sind zumeist mit Mosaikfiltern ausgestattet, wie bspw. in der US3971065 gezeigt. Dabei ist jeder Pixel mit einem Farbfilter versehen, der dessen spektrale Empfindlichkeit so einschränkt, dass der Pixel für vorgegebene Farben empfindlicher ist als für andere. Besonders häufig werden Sensoren mit sogenannten RGB Mosaikfiltern eingesetzt. Bei diesen haben die Farbfilter die Farben Rot (r), Grün (g) und Blau (b). Es gibt aber auch Sensoren mit CMYG Mosaikfiltern mit den Farben Cyan (c), Magenta, (m), Gelb (y) und Grün (g). Bei letzteren ist es gebräuchlich, dass jede Zeile abwechselnd zwei Filter aufweist und dass sich beispielsweise die Filterfarben gerader Zeilen im Abstand von zwei Zeilen wiederholen, während die Filterfarben ungerader Zeilen im Abstand von zwei Zeilen jeweils einen horizontalen Phasenversatz von 180 Grad aufweisen, oder umgekehrt.

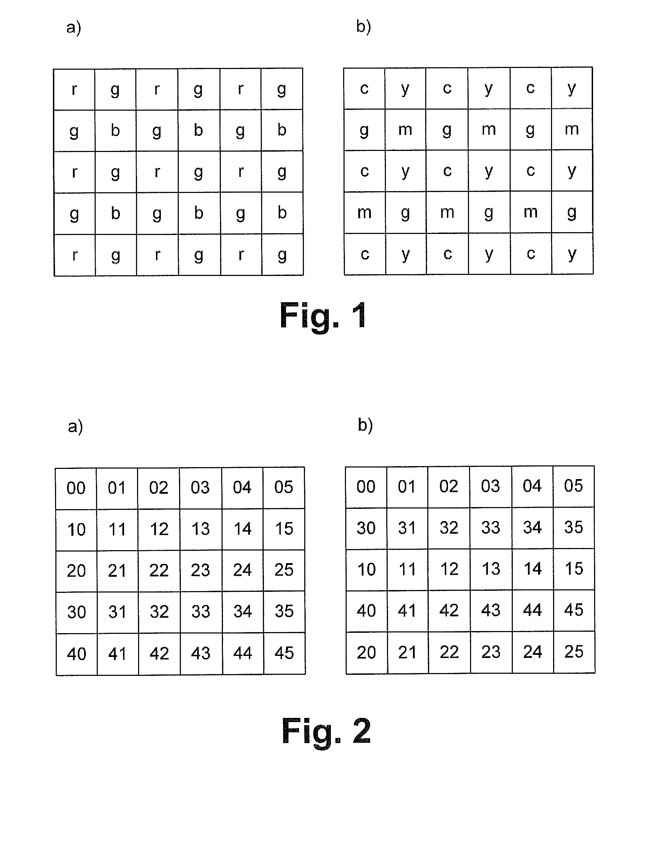

Fig. 1 a zeigt eine schematische Anordnung eines herkömmlichen RGB Mosaikfilters, wobei jedes Kästchen einem Pixel entspricht und Fig. 1b zeigt eine Anordnung eines herkömmlichen CMYG Mosaikfilters mit Farben Cyan (c), Magenta (m), Gelb (y), Grün (g). Die vierte Zeile weist gegenüber der zweiten Zeile einen horizontalen Phasenversatz von 180 Grad auf.

Es sind auch Bildsensoren für eine fortlaufende Bildausgabe bekannt, die im Fachjargon Als "Progressiv Scan" bezeichnet werden. Hierbei werden in einem Auslesevorgang alle Pixel in einer vorgegebenen Reihenfolge ausgelesen. Das ausgelesene Bild weist also ebenso viele Bildpunkte auf, wie der zugehörige Bildsensor Pixel hat. Diese Art des Auslesens entspricht der Übertragung digitaler Bilddaten und ist daher besonders vorteilhaft für digitale Bildverarbeitungsgeräte.

Auch sind solche Bildsensoren bekannt, die für eine halbbildweise Bildausgabe vorgesehen sind. Diese werden vom Fachmann als "interlaced" bezeichnet. Hierbei werden in jedem Auslesevorgang nur halb so viele Bildpunkte ausgelesen, wie der Bildsensor Pixel hat. Ein vollständiges Bild, welches ebenso viele Bildpunkte wie Pixel aufweist, benötigt also zwei aufeinanderfolgende Auslesevorgänge. Diese Sensoren sind zumeist so ausgeführt, dass in einem ersten Auslesevorgang nur die geraden Zeilen und ein einem zweiten Auslesevorgang nur die ungeraden Bildzeilen ausgegeben werden. Diese Funktionsweise entspricht der Übertragung analoger Bildsignale für z.B. PAL oder NTSC und ist dabei besonders vorteilhaft für analoge Bildverarbeitungssysteme.

Fig. 2a zeigt eine fortlaufende Bildausgabe nach dem "Progressive Scan"-Prinzip und

Fig. 2b zeigt eine halbbildweise Bildausgabe nach dem "Interlaced"-Prinzip. Das Auslesen der Pixel erfolgt in der Reihenfolge aufsteigender Zahlen.

Es ist bekannt, das Signal benachbarter Pixel bereits im Sensor zusammenzuführen. Dies bezeichnet der Fachmann als "Binning" bezeichnet (vgl. G. C. Holst, "CCD arrays, cameras, and displays", SPIE Optical Engineering Press, Bellingham 1998).

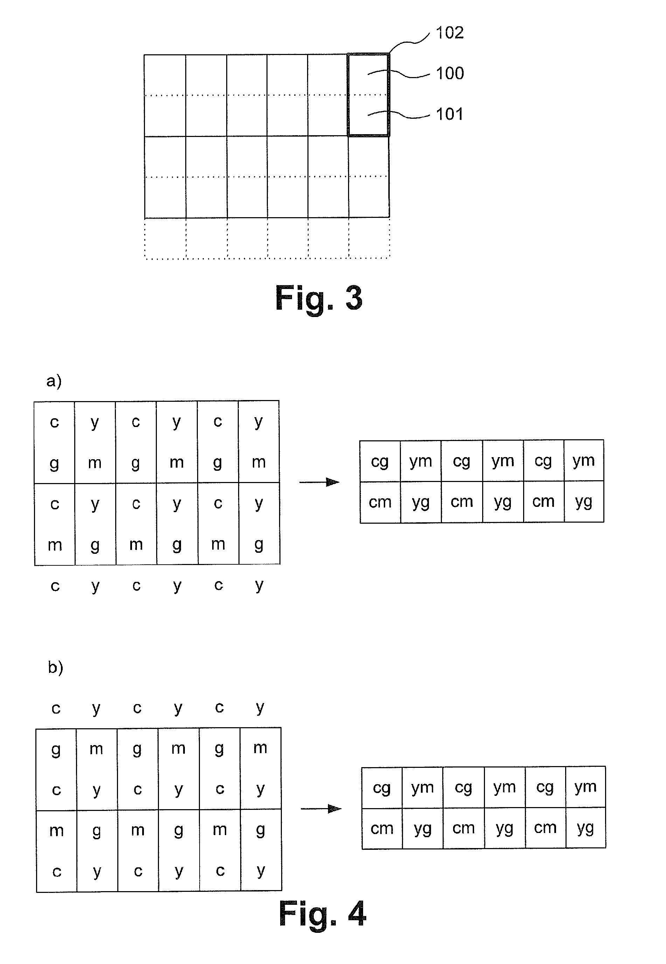

Fig. 3 zeigt einen schematischen Bildsensorausschnitt, bei dem bspw. ein von CCD-Bildsensoren (Charge-Coupled Device) detektiertes Signal eines Pixels durch eine Ladungsmenge repräsentiert wird. Beim Auslesen können die Ladungspakete zweier jeweils in vertikaler Bildrichtung benachbarter Pixel 100, 101 zusammengeführt werden, so dass dadurch größere Ladungspakete 102 entstehen. Dadurch halbiert sich die Auflösung des Bildes in vertikaler Richtung und die Anzahl der ausgelesenen Bildpunkte ist bei gerader Zeilenzahl halb so groß wie die Anzahl der Pixel. Durch Binning lässt sich auf vorteilhafte Weise die Ladungsmenge vergrößern, wodurch die Kamera eine größere Empfindlichkeit aufweist. Dabei verringert sich die Auflösung um die Hälfte.

Es ist bspw. ein CCD Bildsensor bekannt, der einen CMYG-Mosaikfilter sowie eine Interlaced-Auslesestruktur aufweist. Ein bevorzugtes Verfahren zum Betrieb des Bildsensors wird vom Hersteller im zugehörigen Datenblatt angegeben. Dort wird vorgeschlagen, das Bild in ein A-Halbbild und ein B-Halbbild zu unterteilen, welche durch jeweils aufeinander folgende, getrennte Belichtungsvorgänge gewonnen werden. In jedem der Halbbilder wird jeweils vertikales Binning angewandt. Dabei werden die Ladungspakete der Pixel jeweils in einem der Halbbilder mit den oberen und im anderen mit den unteren benachbarten Pixel zusammen geführt. Auf diese Weise sind die Mittelpunkte der den Bildpunkten zugehörigen lichtempfindlichen Flächen im Vergleich der beiden Halbbilder gegeneinander um jeweils eine Pixelzeile verschoben. Das gewonnene Signal lässt sich auf einfache Weise zur Gewinnung eines analogen Videosignals, z.B. NTSC, SECAM oder PAL nutzen.

Durch das Binning werden Ladungspakete zusammen addiert, deren zugehörige Pixel jeweils verschiedene Farbfilter aufweisen. So werden z.B. in einem Pixelzeilenpaar fortlaufend c+g und y+m addiert, in einem weiteren Pixelzeilenpaar fortlaufend c+m und y+g. Als Ergebnis liegt ein Bildsignal aus gebinnten Farben cg, ym, cm und yg vor. Aus diesen lassen sich, wie im Datenblatt angegeben, auf einfache Weise die Signale Y, U = r-Y und V = b-Y generieren, die für die Synthese eines analogen Videosignals benötigt werden.

Fig. 4a zeigt eine halbbildweise Bildausgabe des Bildes eines Bildsensors mit einem CMYG-Mosaikfilter unter Verwendung von vertikalem Binning in einem ersten Halbbild und Fig. 4b zeigt die Bildausgabe in einem zweiten Halbbild. Das Auslesemuster ist jeweils um eine Pixelzeile gegeneinander verschoben.

Digitale Bildverarbeitungsgeräte, wie bspw. Farbkameras, geben üblicherweise fortlaufende Farbbilder aus, bei denen jeder Bildpunkt einen Farbvektor mit mehr als einem Wert zur Beschreibung seiner Farbe aufweist. Da die Pixel von Bildsensoren mit Mosaikfilter nur einen Rohdatenwert zur Verfügung stellen, ist es erforderlich, die fehlenden Werte auf rechnerische Weise zu ermitteln. Die Werte eines Bildpunktes zur Beschreibung einer Farbe können z.B. Primärfarbanteile sein oder Helligkeit, Farbton und Farbsättigung, oder andere Farbvektorkomponenten zur Bezeichnung einer Stelle in einem Farbraum. Ein Verfahren zur rechnerischen Ermittlung solcher fehlender Werte bezeichnet der Fachmann als "Demosaicing". Verfahren zum Demosaicing der Bilddaten von Bildsensoren mit RGB-Farbfiltern sind bspw aus der US6625305 bekannt. Die Ausgabe kann sich auf verschiedene bekannten Farbräume beziehen, z.B. RGB, sRGB oder YUV.

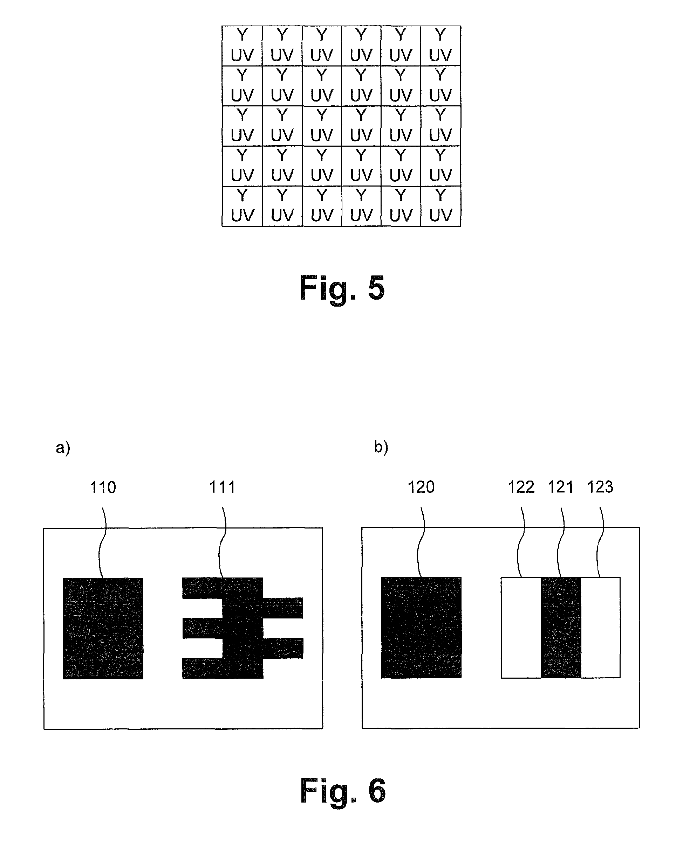

Fig. 5 zeigt ein digitales Farbbild mit Bildpunkten, von den jeder Bildpunkt mehrere Farbkomponenten oder Farben aufweist, z.B. YUV.

Die bekannten Demosaicing-Verfahren für RGB-Bildsensoren lassen sich nicht auf einfache Weise auf CMYG-Bildsensoren mit Binning übertragen. Denn zum ersten besteht der RGB Mosaikfilter aus drei Farben und der CMYG aus vier Farben. Zum zweiten benötigen die bekannten RGB Demosaicing Verfahren jeweils eine Farbinformation, die sich direkt einer Farbe und einem Pixel zuordnen lässt, was bei gebinnten CMYG Farbbilddaten nicht der Fall ist.

Bildsensoren mit CMYG-Mosaikfiltern besitzen gegenüber Bildsensoren mit RGB Mosaikfiltern sowohl Vorteile als auch Nachteile, welche je nach Anwendung verschieden zu bewerten sind. Bildsensoren mit CMYG-Mosaikfilter besitzen häufig eine vorteilhaft bessere Lichtempfindlichkeit, da die Filter der Komplementärfarben c, m und y im Allgemeinen für ein breiteres Spektrum optischer Frequenzen transparent sind als vergleichbare RGB-Farbfilter. Diese bessere Lichtempfindlichkeit ist vor allem für Kameras wichtig, die sowohl bei Tageslicht als auch im Nachtsichtbetrieb eingesetzt werden, wie dies z.B. bei Überwachungskameras im Außeneinsatz häufig der Fall ist. Nachteilig an CMYG-Mosaikfiltern ist ihre teils schlechtere Farbtrennung im Vergleich zu RGB-Mosaikfiltern. Auch kann ein Interesse bestehen, analoge Kameras mit Bildsensoren mit CMYG-Mosaikfilter durch digitale Kameras mit einem baugleichen Bildsensor zu ersetzen. Digitale Kameras bieten den Vorteil, dass sich ihre Bilder verlustfrei übertragen und speichern lassen. Die Verwendung eines baugleichen Bildsensors bei einem Austausch einer analogen Kamera gegen eine digitale Kamera vermeidet auf vorteilhafte Weise eine Anpassung der Optik, der Ansteuerung oder der Auswertung. Das Bild ist also das gleiche, jedoch die Übertragung verbessert sich.

Es gibt Bildsensoren mit CMYG-Mosaikfilter, die preiswerter sind als ein sonst baugleicher Bildsensor mit einem RGB-Mosaikfilter. Auch das kann eine Motivation erklären, eine Digitalkamera mit einem Bildsensor mit CMYG Mosaikfilter auszurüsten.

Der Erfindung liegt die Aufgabe zugrunde, ein digitale Bildverarbeitungsgerät mit einem Bildsensor mit CMYG-Mosaikfilter zur Verfügung zu stellen und ein Verfahren zur Bildverarbeitung mittels Demosaicing für Bildsensoren mit CMYG-Mosaikfilter und Binning.

Diese Aufgabe wird erfindungsgemäß gelöst durch eine Vorrichtung nach Anspruch 1 und ein Verfahren nach Anspruch 16.

Bevorzugte Ausführungsformen der Erfindung werden anhand der beiliegenden Figuren näher erläutert. Es zeigen:
Fig. 1a und 1b schematische Anordnungen herkömmlicher RGB- bzw. CYMG-Mosaikfilter;
Fig. 2a und 2b Beispiele für fortlaufende Bildausgabeschemata nach dem Progressive-Scan- bzw. dem Interlaced-Prinzip;
Fig. 3 einen schematischen Bildsensorausschnitt zur Erläuterung des Binning-Prinzips;
Fig. 4a und 4b ein Beispiel für eine halbbildweise Bildausgabe des Bildes eines Bildsensors in einem ersten bzw. zweiten Halbbild;
Fig. 5 eine Ansicht eines Farbbilds mit Mehrfarb-Bildpunkten;
Fig. 6a und 6b Ansichten mit Streifenartefakten bei Bildern bewegter Objekte bzw. bei halbbildweiser Ausgabe ohne Binning;

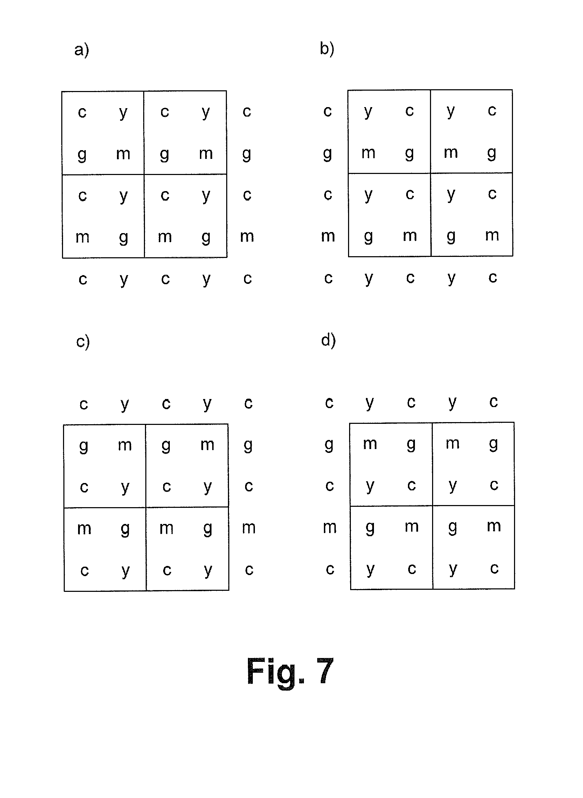

Fig. 7a-7d Ansichten zur Erläuterung einer Pixelgruppenverarbeitung durch Addition und Verschiebung;

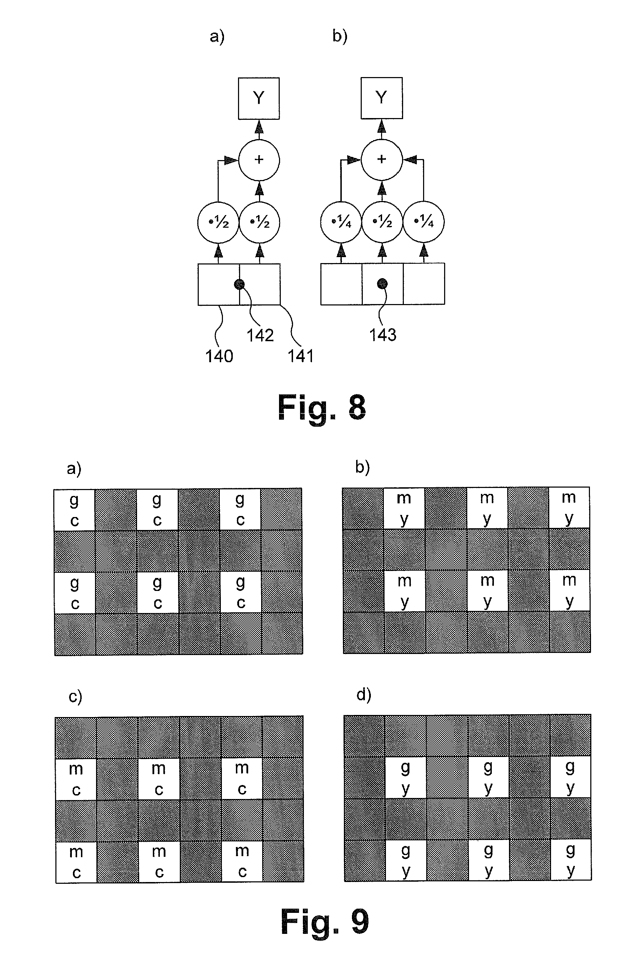

Fig. 8a und 8b Darstellungen zur Erläuterung einer gewichteten Mittelung mit benachbarten Bildpunktwerte,
Fig. 9a-9d Darstellungen zur Erläuterung einer Farbverarbeitung unter Verwendung des Binning-Prinzips;

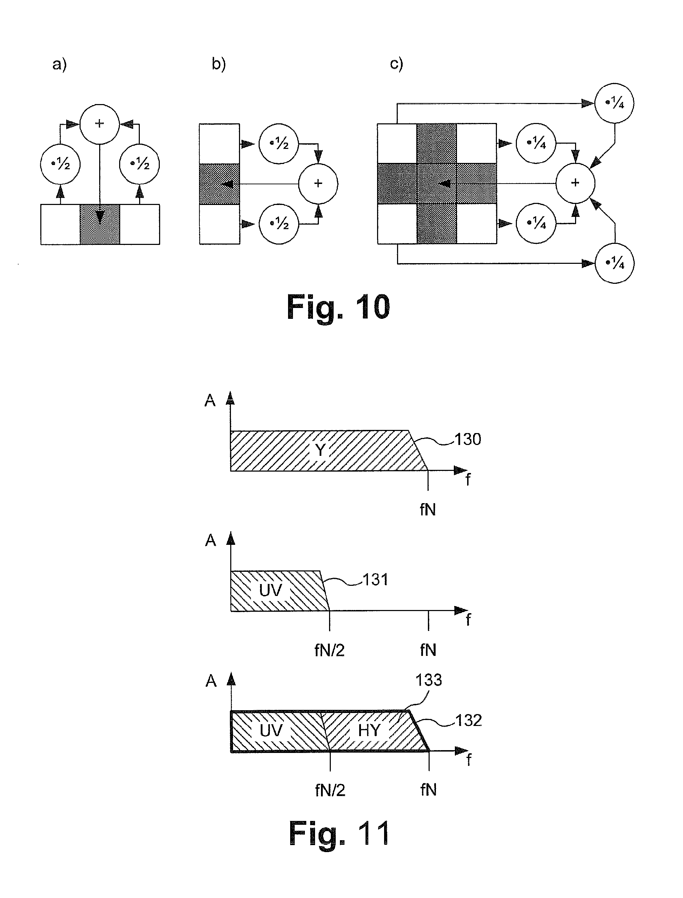

Fig. 10a-10c Darstellungen zur Erläuterung der Ermittlung eines niederfrequenten Bildsignalanteils;
Fig. 11 Frequenzdiagramme der Farbbilder UV und des Hochfrequenzanteils HY;

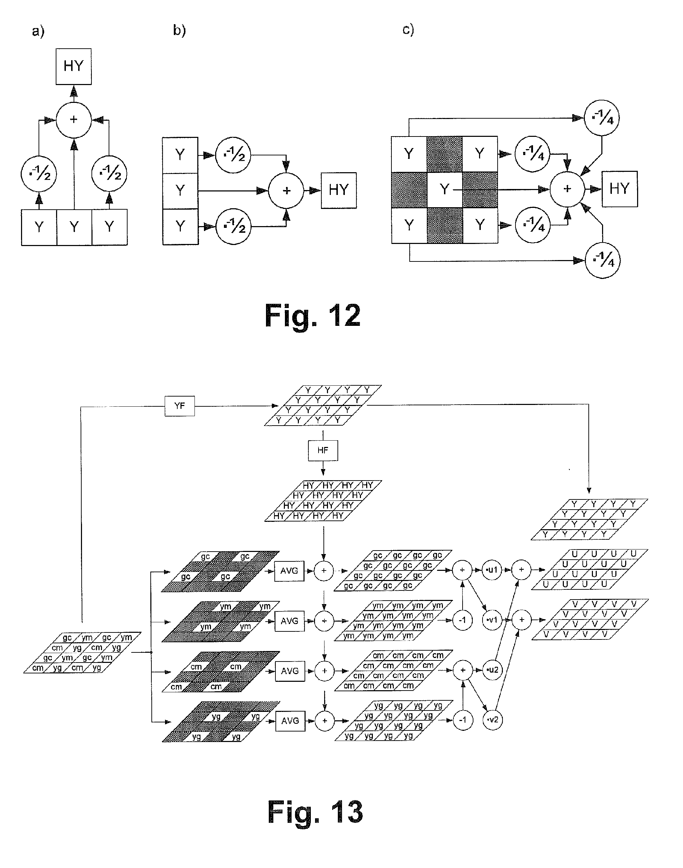

Fig. 12a-12c Darstellungen zur Erläuterung der Ermittlung eines hochfrequenten Bildsignalanteils;
Fig. 13 eine Darstellung des desamten Bildverarbeitungsverfahrens gemäß einem bevorzugten Ausführungsbeispiel;

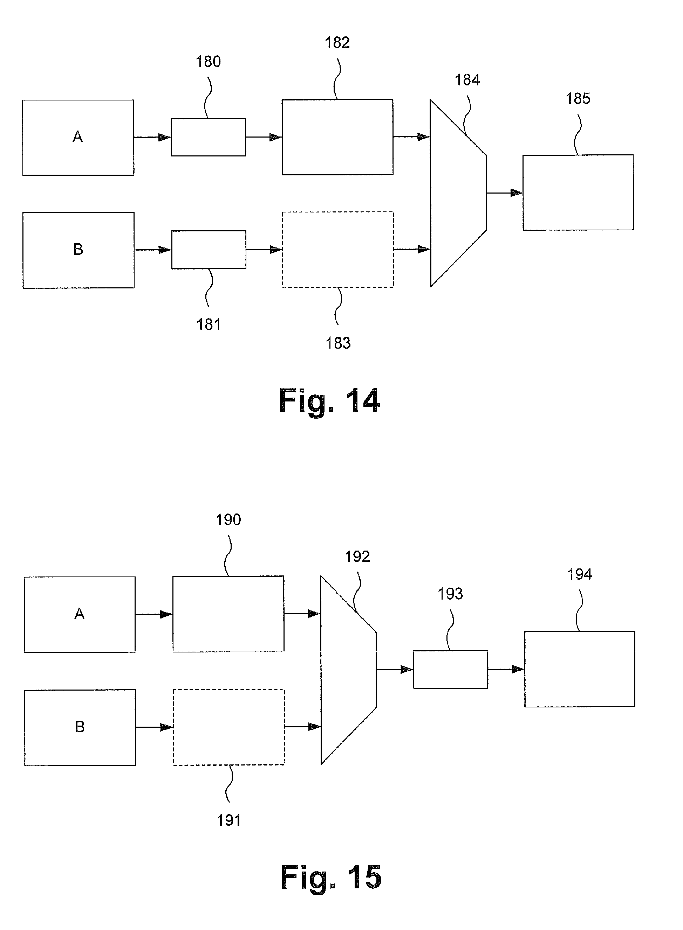

Fig. 14 ein funktionelles Blockdiagramm einer Bildverarbeitung nach einem bevorzugten Ausführungsbeispiel;
Fig. 15 ein funktionelles Blockschaltbild einer Bildverarbeitung nach einem alternativen bevorzugten Ausführungsbeispiel; und

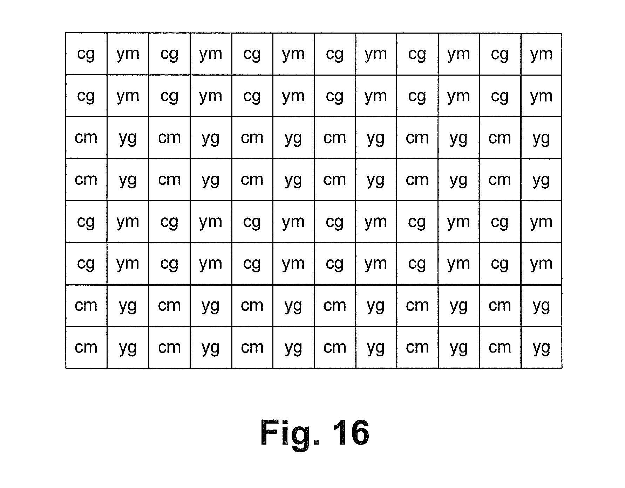

Fig. 16 eine Darstellung eines Farbmusters gebinnter Farben bei Verwendung einer Bildverarbeitung nach dem alternativen bevorzugten Ausführungsbeispiel.

Gemäß einem bevorzugten Ausführungsbeispiel ist ein Bildsensor mit CMYG-Mosaikfilter für halbbildweise Bildausgabe eingerichtet und wird im Binning betrieben. Hierdurch werden auf vorteilhafte Weise Farbartefakte vermieden. Letzteres wird nachfolgend erläutert.

Fig. 5a und 5b zeigen Streifenartefakte bei Bildern bewegter Objekte bzw. Farbsäume, die bei halbbildweiser Bildausgabe entstehen. Bei einer halbbildweisen Bildausgabe wird ein im Bezug auf das Bild ruhendes Objekt 110 korrekt wiedergegeben, während ein im Bezug auf das Bild bewegtes Objekt 111 mit Streifenartefakten wiedergegeben wird. Die Streifenartefakte lassen sich so verstehen, dass das Objekt 111 aufgrund seiner Bewegung im ersten Halbbild eine andere Position einnimmt als im zweiten Halbbild und die Halbbilder werden zeilenweise ineinander gefügt.

Entsteht ein Streifenartefakt im Rohbild eines Bildsensors mit CMYG-Mosaikfilter ohne Binning, so weist ein rekonstruiertes Farbbild eines bewegten Objekts 121 nachteilige Farbsäume 122 und 123 auf. Unter einem Rohbild wird hier das Bild vor einer Farbrekonstruktion verstanden. Die Farbsäume entstehen dadurch, dass jedes Halbbild aufgrund des Mosaikfilters nur zwei Filterfarben aufweist, während zur Bestimmung einer Farbe mindestens drei, vorzugsweise jedoch vier solcher Farben benötigt werden. Diese können folglich aus zwei aufeinanderfolgend aufgenommenen Halbbildern zusammengesetzt werden, in denen jedoch das bewegte Objekt eine andere Position aufweist. Ohne weitere Maßnahmen werden also für einen Bildpunkt nicht zusammengehörende Farben einander zugeordnet, was zu Farbsäumen mit falschen Farben führt. Ein unbewegtes Objekt 120 weist folglich keine Farbsäume auf. Es ist somit vorteilhaft, bei halbbildweiser Bildausgabe Binning einzusetzen.

Für das Demosaicing wird bei halbbildweiser Bildausgabe und Binning für mindestens jedes Halbbild ein Helligkeitsbild ermittelt. in diesem Helligkeitsbild ist jeder Bildposition ein Helligkeitswert Y zugeordnet. Wird ein Binning auf das Bild eines Bildsensors mit CMYG-Mosaikfilter angewandt, so entstehen dadurch Ladungspakete, die jeweils Farbpaaren zugeordnet sind, z.B. cg, ym, cm und yg.

Ein Helligkeitssignal Y lässt sich aus dem Mittelwert bzw. der Summe der Werte benachbarter gebinnter Pixel ermitteln. Hierbei macht es keinen Unterschied ob eine Summe ermittelt wird von gebinnten Pixeln gc + ym oder von gebinnten Pixeln cm + yg. Da das Binning seinerseits eine Addition der beteiligten Pixel ist, ergibt sich in beiden genannten Fällen die Gesamtsumme c + m +y + g.

Auf eine solche Weise lässt sich für jede 2x2-Gruppe von Pixeln ein Y-Wert ermitteln, denn beim genannten CMYG-Mosaikfilter umfasst jede 2x2-Gruppe von Pixel ohne Rücksicht auf die Reihenfolge genau die Farben c, y, g und m.

Fig. 7a-7d zeigen Ansichten zur Erläuterung einer Pixelgruppenverarbeitung durch Addition und Verschiebung, wobei durch Addition zweier horizontal nebeneinander liegender, vertikal gebinnter 1x2-Pixelgruppen jeweils 2x2-Pixelgruppen entstehen, die jeweils die Farben c, y, g und m umfassen. Verschiebt man das Muster gegenüber Fig7a in horizontaler Richtung, so umfasst in Fig. 7b wiederum jede 2x2-Pixelgruppe die Farben c, y, g und m. Gleiches gilt bei vertikaler Verschiebung (vgl. Fig. 7c) und bei diagonaler Verschiebung (vgl. Fig. 7d).

Auf solche Weise ist es unter Vernachlässigung des Sensorrandes möglich, genau so viele Y-Werte zu ermitteln, wie es Pixel gibt. Der Schwerpunkt einer solchen Berechnung liegt zwischen den Sensorspalten. Für nachfolgende Berechnungen ist es wünschenswert, dass der Schwerpunkt genau in der Mitte einer Sensorspalte liegt. Dies kann dadurch erreicht werden, dass zur Hälfte eines gebinnten Farbwertes, z.B. cg, ym, cm oder yg, jeweils ein Viertel des links benachbarten und des rechts benachbarten gebinnten Farbwertes ym, cg, yg oder cm addiert werden. Dadurch kann eine für nachgelagerte Rechenschritte nachteilige horizontale Phasenverschiebung zwischen dem Y-Bild und den Pixelpositionen um eine halbe Pixelbreite vermieden werden.

Fig. 8a und 8b zeigen Verknüpfungsdarstellungen einer horizontalen Phasenverschiebung des Schwerpunkte 142 des Y-Wertes gegenüber der Pixelposition 141 wie sie in Fig. 8a durch Addition der Werte zweier benachbarter gebinnter Pixel 140 und 141 entsteht. Diese Phasenverschiebung lässt sich gemäß Fig. 8b durch eine gewichtete Mittelung mit den beiden horizontalen Nachbarpixeln vermeiden.

Für das Demosaicing wird für jede Pixelposition ein Wert jedes gebinnten Farbwertes (z.B. cg, ym, cm, yg) ermittelt. Dadurch verbessert sich nach nachfolgenden Reche schritten der Bildeindruck auf vorteilhafte Weise. Der Eindruck der Bildschärfe nimmt zu und Farbartefakte an Kanten werden vermieden.

Ein gebinnter Farbwert von beispielsweise vier gebinnten Farbwerten cg, ym, cm und yg wird nur an jeder vierten Stelle des gebinnten Bildes ermittelt. Dabei liegt der gebinnte Farbwert nur in jeder zweiten gebinnten Zeile und nur in jeder zweiten Spalte vor. Dies entspricht jeweils einer Halbierung der Abtastfrequenz in horizontaler und in vertikaler Richtung gegenüber dem Raster der gebinnten Pixel. Jeder andere Farbwert liegt ebenfalls mit der horizontal und vertikal halbierten Abtastfrequenz vor, jedoch mit einer anderen Abtastphase, welche einer anderen räumlichen Position im Bild entspricht.

Fig. 9a-9d zeigen Darstellungen von Bildpunktrastern, bei denen eine gebinnte Farbe jeweils nur auf jeder vierten Position erscheint. Unterschiedliche gebinnte Farben werden an unterschiedlichen Stellen im Bild ermittelt.

Wendet man auf diese Situation eine herkömmliche Bildverarbeitungslehre gemäß dem Stand der Technik an, so werden räumlich nicht exakt einander zugeordnete Farbinformationen verknüpft, was auf nachteilige Weise zu Farbartefakten, z.B. zu Fehlfarben an z.B. Linien oder Kanten führen kann.

Wird hingegen für jeden Bildpunkt ein Farbwert jeder gebinnten Farbe ermittelt, so können in nachfolgenden Rechenschritten solche Farbwerte miteinander kombiniert werden, die zu ein und dem selben Bildpunkt gehören. Dies vermeidet die genannten Fehlfarben an Linien oder Kanten auf vorteilhafte Weise.

Bei der Ermittlung fehlender Werte gebinnter Farben wird der fehlende Wert aus den bekannten Werten nächster Nachbarn rechnerisch ermittelt. In Farbbildern sind Farbflächen sehr viel häufiger als Kanten. Dadurch weisen benachbarte Pixel häufig gleiche oder ähnliche Farbwerte auf. Die Verwendung der Werte benachbarter Pixel hat darüber hinaus den Vorteil, dass bei der Implementierung in sogenannte Pipeline-Operatoren, z.B. in ein Field Programmable Gate Array (FPGA), nur wenige Zeilen bzw. Werte zwischengespeichert werden müssen.

Die Ermittlung fehlender Werte gebinnter Farben verwendet eine Interpolation, vorzugsweise eine Mittelwertbildung. Besonders bei der Verwendung von Pipeline-Operatoren lässt sich eine solche Mittelwertbildung mit sehr geringem Aufwand durchführen und sie liefert gute Ergebnisse.

Fig. 10a-10c zeigen Verknüpfungsdarstellungen für die Ermittlung eines niederfrequenten Anteils des Helligkeitssignals Y, wobei im Ausführungsbeispiel durch Mittelung in der jeweiligen Raumrichtung, in der Nachbarpixel mit Abtastwerten vorliegen.

Vorzugsweise werden fehlende Werte solcher Pixel, die nur diagonale nächste Nachbarn mit bekannten Werten der gesuchten gebinnten Farbe aufweisen, durch Mittelwertbildung aller diagonalen nächsten Nachbarn mit bekannten Werten der gesuchten gebinnten Farbe ermittelt.

Fig. 11 zeigt Frequenzdiagramme mit Frequenzantworten A des Bildinformation, wobei der fehlende Hochfrequenzanteil der Farbbilder UV durch den Hochfrequenzanteil HY des Helligkeitsbildes ersetzt wird.

Bei der Ermittlung fehlender Werte gebinnter Farben wird auf rechnerische Weise der hochfrequenten Helligkeitsanteil HY in dem Helligkeitsbild verwendet. Die Frequenzantwort 131 aller Farbinformationen UV liegt jeweils mit halber Abtastfrequenz vor gegenüber der Frequenzantwort 130 der Helligkeitsinformationen Y. Des Weiteren lässt sich auf vorteilhafte Weise eine korrigierte Frequenzantwort 132 für Farbinformationen nachbilden, indem die vorhandene Frequenzantwort mit halber Abtastfrequenz, welche die niedrigen Frequenzanteile enthält, um den Hochfrequenzanteil HY 133 der Helligkeitsinformation 130 erweitert wird.

Hierdurch lässt sich auf vorteilhafte Weise die Ortsauflösung im Ergebnisbild verbessern, wodurch sich ein Eindruck besserer Bildschärfe ergibt und Bilddetails häufig besser erkannt werden können.

Die Ermittlung des hochfrequenten Helligkeitsverlaufes erfolgt mittels Subtraktion des Mittelwertes der bekannten Helligkeitswerte nächster Nachbarn vom Helligkeitswert des fraglichen Pixels. Es gibt dabei nur solche fehlenden Werte, für die nächste Nachbarn mit bekannten Helligkeitswerten vorliegen. Es kommen nur solche Pixel vor, bei denen die nächsten Nachbarn mit bekannten Helligkeitswerten horizontal benachbart, vertikal benachbart oder in den vier diagonalen Richtungen benachbart sind.

Darüber hinaus ist es vorteilhaft, zur Hochpassfilterung eine solche Berechnungsmethode zu verwenden, die phasenneutral ist. Dadurch wird eine nachteilige Verschiebung des hochpassgefilterten Bildes nach links, rechts, oben, unten oder eine andere Richtung vermieden. Die hier genannte Lösung besitzt diese Eigenschaften.

Zur Ermittlung des hochfrequenten Helligkeitsverlaufes wird einer der nachfolgend genannten Filterprinzipien verwendet:
Fig. 12a-12c zeigt Verknüpfungsdarstellungen, gemäß denen der Hochfrequenzanteil auf vorteilhafte Weise dadurch ermittelt wird, dass vom Wert eines Pixels der Mittelwert der umgebenden Nachbarn der entsprechenden Richtung subtrahiert werden. Der so ermittelte Hochfrequenzanteil ist im Allgemeinen auch bei einem vorzeichenfreien Eingangsbild vorzeichenbehaftet.

Die Ermittlung des Hochfrequenzanteiles erfolgt dabei ebenfalls jeweils unter Berücksichtigung der erforderlichen Raumrichtung.

Die genannten Filter lassen sich auf vorteilhaft einfache Weise in einem Prozessor, einem digitalen Signalprozessor (DSP) oder einem FPGA implementieren. Sie sind alle phasenneutral.

Zur Berechnung eines fehlenden gebinnten Farbwertes werden der durch Interpolation, vorzugsweise Mittelung, benachbarter gleicher Farbwerte ermittelte Wert und der hochfrequente Helligkeitswert HY addiert. Hierdurch lässt sich ein besonders gutes Interpolationsergebnis erzielen. Auch lässt sich durch Simulation nachweisen, dass das hierdurch erzielte Berechnungsergebnis besonders geringe Abweichungen gegen über einem erwarteten Ergebnis zeigt.

Aus vier gebinnten Farbwerten eines Pixels werden zwei Farbwerte U und V auf rechnerische Weise ermittelt. Da bereits ein Helligkeitswert Y vorliegt, lässt sich so auf besonders einfache Weise ein Wert in einem Farbraum ermitteln, nämlich dem YUV-Farbraum.

Auf die vier gebinnten Farbwerte wird ein Weißabgleich angewendet, vorzugsweise dergestalt, dass die Farbwerte jeweils mit einem Korrekturwert multipliziert werden. Durch den Weißabgleich werden unbunte Farben im Bild von der Kamera als unbunte Farben wiedergegeben. Dadurch werden nachteilige Farbstiche weißer oder grauer Bildinhalte auf vorteilhafte Weise vermieden. Ebenso werden Fehlfarben anderer Bildinhalte auf vorteilhafte Weise vermieden.

Die Ermittlung der Farbwerte U und Verfolgt dergestalt, dass die Differenzen der weißabgeglichenen gebinnten Farbwerte cg und ym, bzw. cm und yg ermittelt werden und aus den beiden Differenzen durch Linearkombination die Farbwerte U und Vermittelt werden. Untersuchungen zeigen, dass dies eine einfache Methode ist, gute Farbwerte zu ermitteln.

Fig. 13 zeigt eine Verknüpfungsdarstellung des gesamten Bildverarbeitungsverfahrens gemäß dem Ausführungsbeispiel für ein Demosaicing eines CMYG-Bildsensors.

Aus einem gebinnten Rohbild 160 eines Bildsensors mit CMYG-Mosaikfilter wird durch Anwendung eines Filters 161, welcher eine horizontale Mittelung oder eine horizontale gewichtete Mittelung vornimmt, ein Helligkeitsbild aus Y-Werten 162 gewonnen. Aus diesem wird durch Anwendung von Hochpassfiltern (HF) verschiedener Richtungen 163 ein Hochfrequenzbild 164 mit HY-Werten gewonnen. Weiterhin wird das Rohbild 160 aufgeteilt in einen Rohbildstapel 165 der gebinnten Farbkombinationen gc, ym, cm und yg. Fehlende Positionen in dem Rohbildstapel werden ergänzt durch Mittelwertbildung 166 aus den vorhandenen Werten direkter Nachbarn unter Verwendung von Operatoren AVG, welche die Richtung der Nachbarschaft berücksichtigen, plus 167 den entsprechenden HY Wert des Hochfrequenzbildes 164. Dadurch wird ein Bildstapel 168 erhalten, in dem zu jeder Bildposition Werte von vier Farbkombinationen vorliegen. Durch Differenzbildung 169 der gc und ym-Werte bzw. der cm und yg-Werte und eine Linearkombination durch die mit Faktoren 171 u1, v1, u2 und v2 gewichtete Summation 171 wird ein Ergebnisbildstapel 172 erhalten, wobei dessen Y-Bild aus den Y-Werten 162 übernommen wird, in dem für jede Pixelposition ein Y, ein U und ein V-Wert vorliegen.

Fig. 14 zeigt ein Blockschaltbild einer Bilddatenverarbeitungsprozedur gemäß einem Ausführungsbeispiel für zwei gebinnte Halbbilder eines Bildsensors mit CMYG-Mosaikfilter zum Erhalt eines fortlaufenden Farbbildes.

Für ein erstes gebinntes Halbbild A wird ein erfindungsgemäßes Demosaicing 180 durchgeführt und das erhaltene Ergebnishalbbild 182 wird gespeichert. Für ein zweites gebinntes Halbbild B, welches gegenüber dem ersten um eine Pixelzeile verschoben ist, wird ebenfalls ein erfindungsgemäßes Demosaicing 181 durchgeführt und falls erforderlich das erhaltene Ergebnishalbbild gespeichert 183. Aus beiden Bildern 182 und 183, von denen wenigstens eines gespeichert ist, wird durch das Bildverarbeitungsmittel abwechselnd jeweils eine Zeile ausgegeben, so dass ein fortlaufendes Ergebnisfarbbild 185 erhalten wird.

Dadurch wird eine Datenausgabe aus dem Bildverarbeitungsgerät (z.B. Kamera) bewirkt, die auf vorteilhafter Weise der für digitale Bildverarbeitungsgeräte üblichen Ausgabe als "Progressive Scan"-Vollbild entspricht.

Fig. 15 zeigt ein Blockschaltbild einer Bilddatenverarbeitungsprozedur eines alternativen Ausführungsbeispiels für zwei gebinnte Halbbilder eines Bildsensors mit CMYG-Mosaikfilter zum Erhalt eines fortlaufenden Farbbildes.

Alternativ zu Fig. 14 kann ein gebinntes erstes Halbbild A als Rohbild zwischengespeichert 190 werden und ein gebinntes zweites Halbbild B falls erforderlich zwischengespeichert 191 werden und aus beiden Bildern ein fortlaufendes Vollbild erzeugt werden 192, auf welches das erfindungsgemäße Demosaicing 193 angewendet wird, wodurch ein fortlaufendes Ergebnisbild 194 erhalten wird.

Dadurch wird eine Datenausgabe aus dem Bildverarbeitungsgerät (z.B. Kamera) bewirkt, die auf vorteilhafter Weise der für digitale Bildverarbeitungsgeräte üblichen Ausgabe als "Progressive Scan"-Vollbild entspricht.

Es ist zu beachten, dass das fortlaufende, gebinnte Vollbild ein von den obengenannten Mustern abweichendes Farbmuster besitzt.

Fig. 16 zeigt ein Beispiel für ein Farbmuster gebinnter Farben bei Einsatz des alternativen Ausführungsbeispiels gemäß Fig. 15.

Zur Interpolation und zur Hochpassfilterung eignet sich bspw. das Verfahren des nächsten Nachbarn ("nearest neighbour") sowie eine Ausweitung der oben genannten Verfahren auf den übernächsten Nachbarn an. Die Auswertung erfolgt hierbei aus praktischen Gründen durch eine Rechenvorschrift mit einer gewichteten Mittelung, wobei das Gewicht jeweils umgekehrt zum Abstand zum entsprechenden Nachbarn gewählt wird.

Des Weiteren kann auch die Hochpassfilterung auf übernächste Nachbarn ausgeweitet und eine geeignete Rechenvorschrift anwendet werden.

Die oben genannten Bilder müssen nicht alle explizit ermittelt und gespeichert werden. Sie dienen zur Veranschaulichung des Verfahrens. So können z.B. jeweils mehrere Schritte zusammengefasst werden. Auch kann ggf. auf die Berechnung nicht weiter verwendeter Zwischenergebnisse verzichtet werden. Das beschriebene Bildverarbeitungsverfahren und -gerät kann in einer Kamera beispielsweise in einem Prozessor (z.B. DSP) oder einem FPGA implementiert werden. Es ist möglich, aus YUV-Daten mit bekannten Verfahren Farbvektoren eines anderen Farbraumes z.B. des RGB- oder des sRGB- oder aus des L*a*b*- Farbraumes zu errechnen. Weiterhin können solche Berechnungen mit den vorstehend beschriebenen Rechenvorschriften der Ausführungsbeispiele zur Berechnung für die Y-, U- und V- Werte zusammengeführt, um dadurch ohne Ermittlung eines YUV-Wertes direkt einen Farbvektor eines anderen Farbraumes zu bestimmen.

Es ist möglich, alle ermittelten Werte aus dem Bildverarbeitungsgerät auszugeben. Auch ist es möglich, Protokolle zu verwenden, z.B. YUV 4:2:2, bei denen nur Teile der ermittelten Information ausgegeben werden. Auch ist es möglich, auf die Berechnung solcher Informationen, die nicht ausgegeben werden, zu verzichten.

## Patentansprüche

1. Bildverarbeitungsgerät mit:
- einem Bildverarbeitungsmittel;
- einem Bildsensor mit einem Mosaikfilter bestehend aus Farbfiltern der Farben Cyan (C), Magenta (M), Gelb (Y) und Grün (G); und
- einer digitalen Schnittstelle zur Ausgabe von Bilddaten, bei denen jeder Bildpunkt mindestens zwei Werte zur Beschreibung seiner Farbe aufweist,
- **dadurch gekennzeichnet, dass**
- das Bildverarbeitungsmittel ausgestaltet ist, fehlenden Werte zur Beschreibung der Farbe von Bildpunkten rechnerisch zu ermitteln

2. Bildverarbeitungsgerät nach Anspruch 1, wobei der Bildsensor mit dem CMYG-Mosaikfilter für eine halbbildweise Bildausgabe eingerichtet und im Binning betrieben wird.

3. Bildverarbeitungsgerät nach Anspruch 1 oder 2, wobei das Bildverarbeitungsmittel ausgestaltet ist, um mittels Demosaicing bei halbbildweiser Bildausgabe und Binning für mindestens jedes Halbbild ein Helligkeitsbild zu ermittelt, und wobei jeder Bildposition ein Helligkeitswert (Y) zugeordnet ist.

4. Bildverarbeitungsgerät nach Anspruch 3, wobei das Bildverarbeitungsmittel ausgestaltet ist, um für das Demosaicing für jede Pixelposition ein Wert jedes gebinnten Farbwertes zu ermitteln.

5. Bildverarbeitungsgerät nach Anspruch 3 oder 4, wobei das Bildverarbeitungsmittel ausgestaltet ist, um bei der Ermittlung fehlender Werte gebinnter Farben den fehlenden Wert aus den bekannten Werten nächster Nachbarn rechnerisch zu ermitteln.

6. Bildverarbeitungsgerät nach Anspruch 5, wobei das Bildverarbeitungsmittel ausgestaltet ist, um die fehlenden Werte gebinnter Farben durch Interpolation oder Mittelwertbildung zu berechnen.

7. Bildverarbeitungsgerät nach Anspruch 5, wobei das Bildverarbeitungsmittel ausgestaltet ist, um die fehlenden Werte basierend auf einem hochfrequenten Anteil im Helligkeitsverlauf des Helligkeitsbilds zu ermitteln.

8. Bildverarbeitungsgerät nach Anspruch 7, wobei das Bildverarbeitungsmittel ausgestaltet ist, um den hochfrequenten Anteil mittels Subtraktion des Mittelwerts bekannter Helligkeitswerte nächster Nachbarn vom Helligkeitswert des fraglichen Pixels zu ermitteln.

9. Bildverarbeitungsgerät nach Anspruch 7 oder 8, wobei das Bildverarbeitungsmittel ausgestaltet ist, um den hochfrequente Anteil unter Berücksichtigung der erforderlichen Raumrichtung zu ermitteln.

10. Bildverarbeitungsgerät nach Anspruch 7, wobei das Bildverarbeitungsmittel ausgestaltet ist, um einen fehlenden gebinnten Farbwert durch Addition eines aus benachbarten Farbwerten ermittelten Werts mit einem hochfrequenten Helligkeitswert zu ermitteln.

11. Bildverarbeitungsgerät nach Anspruch 5, wobei das Bildverarbeitungsmittel ausgestaltet ist, um aus vier gebinnten Farbwerten eines Pixels zwei Farbwerte U und V zu ermitteln.

12. Bildverarbeitungsgerät nach Anspruch 11, wobei das Bildverarbeitungsmittel ausgestaltet ist, um auf die vier gebinnten Farbwerte einen Weißabgleich dergestalt anzuwenden, dass die Farbwerte jeweils mit einem Korrekturwert multipliziert werden.

13. Bildverarbeitungsgerät nach Anspruch 12, wobei das Bildverarbeitungsmittel ausgestaltet ist, dass Differenzen der weißabgeglichenen gebinnten Farbwerte (cg und ym, bzw. cm und yg) ermittelt und aus den erhaltenen Differenzen durch Linearkombination die Farbwerte U und V ermittelt werden.

14. Bildverarbeitungsgerät nach einem der vorhergehenden Ansprüche, wobei das Bildverarbeitungsmittel ausgestaltet ist, um für ein erstes gebinntes Halbbild ein Demosaicing durchzuführen und das erhaltene Ergebnishalbbild zu speichern, für ein zweites gebinntes Halbbild, welches gegenüber dem ersten um eine Pixelzeile verschoben ist, ebenfalls ein Demosaicing durchzuführen, und aus dem ersten und zweiten gebinnten Halbbild abwechselnd jeweils eine Zeile über die Schnittstelle auszugeben, so dass ein fortlaufendes Ergebnisfarbbild erhalten wird.

15. Bildverarbeitungsgerät nach einem der Ansprüche 1 bis 13, wobei das Bildverarbeitungsmittel ausgestaltet ist, um ein gebinntes erstes Halbbild als Rohbild zwischen zu speichern und aus dem gebinnten ersten Halbbild und einem gebinnten zweiten Halbbild ein fortlaufendes Vollbild zu erzeugen, auf welches ein Demosaicing angewendet wird.

16. Bildverarbeitungsverfahren mit den Schritten:
- Erfassen von pixelorientierten Bilddaten mit einem Bildsensor mit einem Mosaikfilter bestehend aus Farbfiltern der Farben Cyan (C), Magenta (M), Gelb (Y) und Grün (G); und
- Ausgabe von Bilddaten, bei denen jeder Bildpunkt mindestens zwei Werte zur Beschreibung seiner Farbe aufweist,
- **gekennzeichnet durch**
- rechnerische Ermittlung fehlender Werte zur Beschreibung der Farbe von Bildpunkten.
